Europäisches Patentamt

European Patent Office

Office européen des brevets

(19)

(11) **EP 0 597 630 B1**

(12) **EUROPEAN PATENT SPECIFICATION**

(45) Date of publication and mention
of the grant of the patent:
**31.07.2002 Bulletin 2002/31**

(51) Int Cl.7: **G06F 17/27**, G06F 17/30

(21) Application number: **93308829.6**

(22) Date of filing: **04.11.1993**

(54) **Method for resolution of natural-language queries against full-text databases**

Verfahren, um natursprachliche Abfragen von Textdatenbanken zu lösen

Procédé pour résoudre des demandes en langage naturel dans des bases de données de textes

(84) Designated Contracting States:
**AT BE CH DE DK ES FR GB GR IE IT LI LU MC NL
PT SE**

(30) Priority: **04.11.1992 US 970718**

(43) Date of publication of application:
**18.05.1994 Bulletin 1994/20**

(73) Proprietor: **CONQUEST SOFTWARE INC.**
**Columbia, Maryland MD-21046 (US)**

(72) Inventors:
• **Addison,Edwin R. Conquest Software Inc.
Columbia,Maryland MD-21046 (US)**
• **Blair,Arden S. Conquest Software Inc.
Columbia,Maryland MD-21046 (US)**
• **Nelson,Paul E. Conquest Software Inc.
Columbia,Maryland MD-21046 (US)**
• **Schwartz,Thomas Conquest Software Inc.
Columbia,Maryland MD-21046 (US)**

(74) Representative: **Goodman, Christopher
Eric Potter Clarkson,
Park View House,
58 The Ropewalk
Nottingham NG1 5DD (GB)**

(56) References cited:
**EP-A- 0 494 573**     **US-A- 4 849 898**
**US-A- 5 056 021**

EP 0 597 630 B1

## Description

The present invention is a method for computer-based information retrieval. Specifically, the method of the present invention comprises a computer-implemented text retrieval and management system. The present invention offers four advances in the art of computer-based text retrieval. First, querying is simple. Queries may be expressed in plain English (or in another suitable human language). Second, searching for "concepts" has been found to be more accurate than Boolean, keyword or statistical searching as practiced in the prior art. Third, the method of the present invention is more efficient than sophisticated text retrieval methods of the prior art. It is faster (in equivalent applications), and features recall in excess of 80%, as compared to recall of less than 30% for Boolean systems, and approximately 50% for statistical methods of the prior art. Finally, the method of the present invention manages the entire research process for a user.

## Background of the Invention

While there are dozens of information retrieval software systems commercially available, most of them are based on older Boolean search technology. A few are based on statistical search techniques which have proven to be somewhat better. But, to break the barrier to access to relevant information and to put this information in the hands of end users at the desktop requires search software that is intuitive, easy to use, accurate, concept oriented, and needs a minimum investment of time by the user. The following distinctive features and benefits delineate these significant aspects of the method of the present invention.

To date, there have been three major classes of text retrieval systems:

- Keyword or Boolean systems that are based on exact word matching
- Statistical systems that search for documents similar to a collection of words
- Concept based systems that use knowledge to enhance statistical systems

Keyword or Boolean systems dominate the market. These systems are difficult to use and perform poorly (typically 20% recall for isolated queries). They have succeeded only because of the assistance of human experts trained to paraphrase queries many different ways and to take the time to humanly eliminate the bad hits. While statistical search systems have increased performance to near 50% recall, trained search expertise is still needed to formulate queries in several ways to conduct an adequate search.

A concept based search system further closes the performance gap by adding knowledge to the system. To date, there is no standard way to add this knowledge. There are very few concept based search systems available and those that exist require intensive manual building of the underlying knowledge base.

The next logical direction for improvement in text retrieval is its use of Natural Language Processing (NLP). While there are some experimental systems in government development programs, most of those prototypes have been only useful in narrow subject areas, they run slowly, and they are incomplete and unsuitable for commercialization. The failure of many early research prototypes of NLP based text retrieval systems has led to much skepticism in the industry, leading many to favor statistical approaches.

There has been a growing interest in the research community in the combination of NLP and conventional text retrieval. This is evidenced by the growing number of workshops on the subject. The American Association of Artificial Intelligence sponsored two of them. The first was held at the 1990 Spring AI Symposium at Stanford University on the subject of "Text Based Intelligent Systems". The second one (chaired by the applicant herein) was held at AAAI-91 in Anaheim in July 1991.

## Natural Language Techniques

The literature is rich in theoretical discussions of systems intended to provide functions similar to those outlined above. A common approach in many textbooks on natural language processing (e.g., Natural Language Understanding, James Allen, Benjamin Cummings, 1987) is to use "semantic interpretation rules" to identify the meanings of words in text. Such systems are "hand-crafted", meaning that new rules must be written for each new use. These rules cannot be found in any published dictionary or reference source. This approach is rarely employed in text retrieval is usually fails in some critical way to provide adequate results.

Krovetz has reported in various workshops (AAAI-90 Spring AI Symposium at Stanford University) and in Lexical Acquisition by Uri Zernick, Lawrence Erlbaum, 1991, ISBN 0-8056-0829-9, that "disambiguating word senses from a dictionary" would improve the performance of text retrieval systems, claiming experiments have proven that this method will improve precision. This author's philosophy suggests that a word sense be identified by "confirmation in context from multiple sources of evidence". None of Krovetz's published works propose a specific technique for doing so, and his recent publications indicate that he is "experimenting" to find suitable methods.

Eugene Charniak, of Brown University has reported in "AI Magazine" (AAAI, Winter 1992), and has spoken at the Naval Research Laboratory AI Laboratory (November 1991)about the technique of employing "spreading activation" to identify the meaning of a word in a small text. Charniak employs a "semantic network" and begins with all instances of a given word. It then "fans out" in the network to find neighboring terms that are located near the candidate term in the text. This technique suffers from 2 admitted drawbacks: it requires a high-quality partially hand-crafted, *small* semantic network, and this semantic network is not derived from published sources. Consequently, the Charniak method has never been applied to any text longer than a few sentences in a highly restricted domain of language.

Stephanie Haas, of the University of North Carolina, has attempted to use multiple dictionaries in information retrieval including a main English dictionary coupled with a vertical application dictionary (such as a dictionary of computer terms used in a computer database). Haas' approach does not take advantage of word sense disambiguation, and she reported at ASIS, October 1991 that merging two dictionaries gave no measurable increase in precision and recall over a single generic English dictionary.

Uri Zernick, editor of Lexical Acquisition, Lawrence Erlbaum, 1991, suggests in the same book a "cluster signature" method from pattern recognition be used to identify word senses in text. The method lists words commonly co-occurring with a word in question and determines the percentage of the time that each of the commonly occurring words appears in context in the database or corpus for each word meaning. This is called the "signature" of each word meaning. The signatures of each meaning are compared with the use of a word in context to identify the meaning. This pattern recognition approach based upon a cluster technique discussed in Duda and Hart, Pattern Classification and Scene Analysis, John Wiley & Sons, New York 1973 has the obvious drawback that it has to be "trained" for each database. The signature information is not readily obtainable from a published dictionary.

Brian Slator, (in the same book edited by Zernick above), discusses use of a "subject hierarchy" to compute a "context score" to disambiguate word senses. Generally, a "subject" or topic is identified by the context. A meaning is then selected by its relevance to the topic. This approach is only as strong as the depth of the subject hierarchy and it does not handle exceptions. A drawback of this approach is that available subject hierarchies do not cover a significant portion of the lexicon of any dictionary, let alone the vocabulary of a native speaker of a language.

One well known example of prior art in text retrieval that uses natural language input is the statistical techniques developed by Gerard Salton of Cornell University. His research system called SMART is now used in commercial applications, for example, Individual Inc. of Cambridge, MA uses it in a news clipping service. Dr. Salton is well known for his claims that natural language processing based text retrieval systems do not work as well as SMART. He bases such claims on limited experiments that he ran in the 1960's. At the 1991 ASIS meeting he stated that the reason natural language processing based systems don't work is that syntax is required and syntax is not useful without semantics. He further claims that "semantics is not available" due to the need to handcraft the rules. However, the system of the present invention has made semantics available through the use of statistical processing on machine readable dictionaries and automatic acquisition of semantic networks.

**Lexical Acquisition**

In the field of lexical acquisition, most of the prior art is succinctly summarized in the First Lexical Acquisition Workshop Proceedings. August 1989, Detroit at IJCAI-89. There is a predominance of papers covering the automatic building of natural language processing lexicons for rule-based processing. Over 30 papers were presented on various ideas, isolated concepts or prototypes for acquiring information from electronic dictionaries for use in natural language processing. None of these proposed the automatic building of a semantic network from published dictionaries.

**Indexing**

Typical text search systems contain an index of words with references to the database. For a large document databases, the number of references for any single term varies widely. Many terms may have only one reference, while other terms may have from 100,000 to 1 million references. The prior art substitutes thesaurus entries for search terms, or simply requires the user rephrase his queries in order to "tease information out of the database". The prior art has many limitations. In the prior art, processing is at the level of *words,* not *concepts.* Therefore, the query explosion produces too many irrelevant variations to be useful in most circumstances. In most prior art systems, the user is required to restate queries to maximize recall. This limits such systems to use by "expert" users. In prior art systems, many relationships not found in a classical thesaurus cannot be exploited (for example, a "keyboard" is *related to* a "computer" but it is not a synonym).

**Contextual Systems**

The prior art of systems which attempt to extract contextual understanding from natural language statements is primarily that of Gerard Salton (described in Automatic Text Processing, Addison-Wesley Publishing Company, 1989.) As described therein, such systems simply count terms (words) and co-occurrences of terms, but do not "understand" word meanings.

Routing means managing the flow of text or message streams and selecting only text that meets the desired profile of a given user to send to that user. Routing is useful for electronic mail, news wire text, and intelligent message handling. It is usually the case that a text retrieval system designed for retrieval from archived data is not good for routing and visa versa. For news wire distribution applications (which seek to automate distribution of the elements of a "live" news feed to members of a subscriber audience based on "interest profiles"), it is time-intensive and very difficult to write the compound Boolean profiles upon which such systems depend. Furthermore, these systems engage in unnecessary and repetitive processing as each interest profile and article are processed.

**Document Ranking**

Systems which seek to rank retrieved documents according to some criterion or group of criteria are discussed by Salton, in Automatic Text Processing (ranking on probabilistic terms), and by Donna Harmon, in a recent ASIS Journal article, (ranking on a combination of frequency related methods). Several commercial systems use ranking but their proprietors have never disclosed the algorithms used. Fulcrum uses (among other factors) document position and frequency. Personal Library Software uses inverse document frequency, term frequency and collocation statistics. Verity uses "accrued evidence based on the presence of terms defined in search topics".

**Concept Definition and Search**

The prior art comprises of two distinct methods for searching for "concepts". The first and most common of these is to use a private thesaurus where a user simply defines terms in a set that are believed to be related. Searching for any one of these terms will physically also search for and find the others. The literature is replete with research papers on uses of a thesaurus. Verity, in its Topic software, uses a second approach. In this approach users create a "topic" by linking terms together and declaring a numerical strength for each link, similar to the construction of a "neural network". Searching in this system retrieves any document that contains sufficient (as defined by the system) "evidence" (the presence of terms that are linked to the topic under search). Neither of these approaches is based upon the meanings of the words as defined by a publisher's dictionary.

Other prior art consists of two research programs:

- TIPSTER: A government research program called TIPSTER is exploring new text retrieval methods. This work will not be completed until 1996 and there are no definitive results to date.
- CLARIT: Carnegie Mellon University (CMU) has an incomplete prototype called CLARIT that uses dictionaries for syntactic parsing information. The main claim of CLARIT is that it indexes phrases that it finds by syntactic parsing. Because CLARIT has no significant semantic processing, it can only be viewed as a search extension of keywords into phrases. Their processing is subsumed by the present invention, with the conceptual processing and semantic networks.

**Hypertext**

Prior art electronically-retrieved documents use "hypertext", a form of manually pre-established cross-reference. The cross-reference links are normally established by the document author or editor, and are static for a given document. When the linked terms are highlighted or selected by a user, the cross-reference links are used to find and display related text.

**Machine Abstracting**

Electronic Data Systems (EDS) reported machine abstracting using keyword search to extract the key sentences based on commonly occurring terms which are infrequent in the database. This was presented at an American Society for Information Systems (ASIS) 1991 workshop on natural language processing. They further use natural language parsing to eliminate subordinate clauses.

The present invention is similar, except that the retrieval of information for the abstract is based upon concepts, not just keywords. In addition, the present invention uses semantic networks to further abstract these concepts to gain some general idea of the intent of the document.

**Summary**

The prior art may be summarized by the shortcomings of prior art systems for textual document search and retrieval. Most commercial systems of the prior art rely on "brute force indexing" and word or wild card search which provides fast response only for lists of documents which are ranked according to a precomputed index (such as document date) and not for relevance-ranked lists. For systems which attempt to relevance rank, the user must wait for the entire search to complete before any information is produced. Alternatively, some systems display documents quickly, but without any guarantee that documents displayed are the most relevant.

The systems of the prior art rank documents retrieved on the presence of words, not word meanings. The prior art systems fail to use linguistic evidence such as syntax or semantic distance. No known prior art system can combine more than a two or three ranking criteria. No known system in the prior art is capable of acquiring semantic network information directly from published dictionaries, and thus, to the extent that such networks are used at all, they must be "hand built" at great expense, and with the brittleness which results from the author's purpose and bias.

In thesaurus-based information retrieval systems, as well as topic based information retrieval systems, concepts are created by linking words, not word meanings. In these systems (thesaurus and topic based), the user has the burden of creating concepts before searching. In addition, for topic based systems, the user has the added burden of making arbitrary numeric assignments to topic definitions. Prior art thesaurus and topic based systems do not link new concepts to an entire network of concepts in the natural language of search. Instead, isolated term groups are created that do not connect to the remainder of any concept knowledge base. Topic based systems require that topics be predefined to make use of concept-based processing.

Finally, for hypertext systems, authors need not spend time coding hypertext links to present a hypertextual document to users because a natural language search (perhaps taken directly from the document itself) will find all relevant concepts, not just those found by the author.

Document US 4,849,898 describes a text comprehension and retrieval method that uses letter-semantic analysis of the micro-syntax, or syntax between the letters in two words to provide a numeric measure of how much those words might be related. Rather than attempting to find a language-specific likely meaning of a word before conducting a search, the method attempts to use consonant structure and positioning within a word to provide a language-independent method. EP 0494573 A1 discloses a method for automatically disambiguating the synonymic links in a dictionary for a natural language processing system.

Said dictionary is stored in the memory of a data processing system and includes a list of headwords with their respective synonym lists. The same headword can have different meanings, each of which has its own synonym list, each of which also can have different meanings. Disambiguation of the synonymic links is performed by reading from said dictionary a "meaning- entry", the words from which it is a synonym and its own list of synonyms, to build a synonymic environment table. A similarity index is computed for each pair of words of said environment and the words having the greatest similarity with the aggregate are incrementally clustered. The final cluster is then validated and the "meaning-entry" and its disambiguated synonyms are written back into the dictionary. US 5,056,021 describes a method for abstracting meanings from natural language words using a thesaurus to determine levels of abstraction and category of meanings for words.

Each word is analysed for its semantic content by mapping into its category of meanings within each of four levels of abstraction. The preferred embodiment uses Roget's Thesaurus and Index of Classification to determine the levels of abstraction and category of meanings for words. Each of a sequence of words is mapped into the various levels of abstraction, forming a file of category of meanings for each of the words. The common categories between words are determined, and these common elements are output as data indicative of the most likely categories of meaning in each of the levels of abstraction to indicate the proper meaning intended to be conveyed. This data is then processed according to a rule to obtain a result.

**Brief Description of the Invention**

The method of the present invention combines concept searching, document ranking, high speed and efficiency, browsing capabilities, "intelligent" hypertext, document routing, and summarization (machine abstracting) in an easy-to-use implementation.

The method offers three query options:

Natural Language: finding documents with concepts expressed in plain English;
Query by Example: Present a document, retrieve similar documents;
Private Concept: define a new term, enter it in the "semantic network", search.

The method of the present invention continues to provide Boolean and statistical query options so that users will have easy access to a familiar interface and functionality while learning new and more powerful features of the present invention.

The method of the present invention is based upon "concept indexing" (an index of "word senses" rather than just words.) A word sense is a specific use or meaning of a word or idiom. The method of the present invention builds its concept index from a "semantic network" of word relationships with word definitions drawn from one or more standard English dictionaries. During query, users may select the meaning of a word from the dictionary during query construction. This results in a measurable improvement in precision.

Results of text searching are retrieved and displayed in ranked order. The ranking process is more sophisticated than prior art systems providing ranking because it takes linguistics and concepts, as well as statistics into account.

The method of the present invention uses an artificial intelligence "hill climbing" search to retrieve and display the best documents while the remainder of the search is still being processed. The method of the present invention achieves major speed advantages for interactive users.

Other significant functions of the method of the present invention including browsing documents (viewing documents directly and moving around within and between documents by related concepts), implementing "dynamically compiled" hypertext, routing, and machine abstracting or automatic summarization of long texts.

**Brief Description of the Drawings**

Figure 1 depicts the computer program modules which implement the method of the present invention.

Figures 2a-d depict a detailed flow diagram of the concept indexing process according to the present invention.

Figure 3 depicts the process whereby the method of the present invention disambiguates word senses based on "concept collocation".

Figure 4 depicts the sources of information in an automatically-acquired machine-readable dictionary according to the present invention.

Figure 5 illustrates the structure of the machine-readable dictionary of the present invention.

Figure 6 depicts a flow diagram of the query process according to the present invention.

**Detailed Description of the Invention**

The method of the present invention is a "Natural Language Processing" based, text retrieval method. There are very few concept based search systems available and those that exist require intensive manual building of the underlying knowledge bases. The method of the present invention uses published dictionaries to build (automatically) the underlying knowledge base. The dictionary provides the knowledge needed to process accurately plain English or "natural language" input, making the user interface considerably simpler.

In the method of the present invention:

- There are no hand-crafted rules for each word meaning
- Idioms and repetitive phrases are processed as a single meaning
- Unknown words, proper names and abbreviations are automatically processed
- Ill formed input with poor grammar and spelling errors can be processed

The method of the present invention has combined the document ranking procedure with the search procedure. This allows for fast "hill-climbing" search techniques to quickly find the only the best documents regardless of database size. All available search systems first retrieve all possible documents and then rank the results, a much slower process. The method of the present invention uses these search techniques to support the advanced demands of natural language text retrieval.

In the method of the present invention:

- Only the best documents are retrieved
- Searching is guided by document ranking
- The document database is automatically divided into multiple sets
- Searching over document sets significantly improves method performance

## Architecture

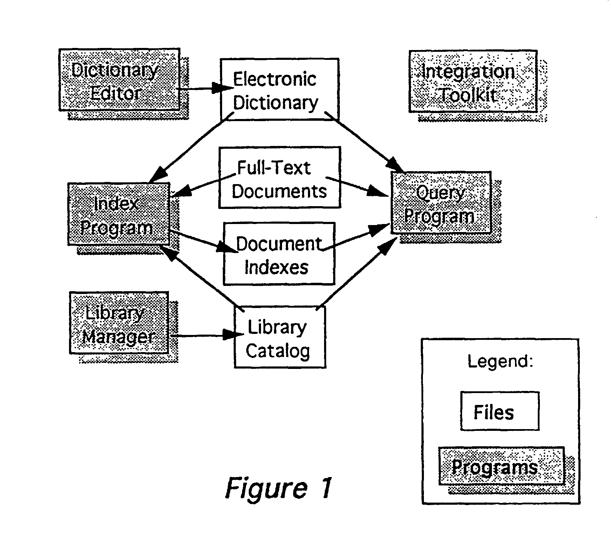

The method of the present invention has been implemented as 5 computer program modules: the Query Program, the Index Program, the Library Manager, Dictionary Manager, and the Integrator's Toolkit. Each of these are defined below and their relationships are shown in Figure 1.

- Query Program       Program to accept queries and execute searches
- Index Program       Program to index new or updated documents
- Library Manager       Program to manage the organization of text files
- Dictionary Editor       Program to maintain dictionary / private searches
- Integrator's Toolkit       Program for developers to integrate the present invention with other computer systems and program products

The method of the present invention offers Graphical User Interfaces, command line interfaces, and tools to customize the user interface. The display shows the title hits in ranked-order and the full text of the documents. Documents can be viewed, browsed and printed from the interface. The Integrator's Toolkit allows the product to be installed in any interface format. The system is an open system. It makes heavy use of "Application Program Interfaces" (APIs), or interfaces that allow it to be integrated, linked or compiled with other systems.

## Natural Language Processing

The method of the present invention is the first text search system that uses published dictionaries to build automatically the underlying knowledge base, eliminating the up front cost that an organization must absorb to use other concept based search systems. In addition, the dictionary gives knowledge needed to process accurately natural language input, making the user interface considerably simpler. The algorithms used identify the meaning of each word based upon a process called "spreading activation". NLP as used in the present invention improves text retrieval in many ways, including the following:

- Morphological analysis allows better matching of terms like "computing" and "computational". Traditional suffix stripping hides these related meanings and may introduce errors when suffixes are improperly removed.
- Syntactic analysis gives insight into the relationship between words.
- Semantics resolve ambiguity of meaning (i.e., chemical plant vs. house plant).
- Natural Language may be used to interact with the user, including allowing the user to select meanings of words using dictionary definitions

## Statistical Word Sense Disambiguation Using a Publisher's Dictionary

The purpose of this method is to identify the specific meaning of each word in the text as identified in a publisher's dictionary. The reason to do this is to increase the precision of the return during document retrieval and browsing. This is primarily a semantic "word sense disambiguation" and takes place via a "spreading activation" concept through a "semantic network". The method used disambiguates word senses (identify word meanings) based on "concept collocation". If a new word sense appears in the text, the likelihood is that it is similar in meaning or domain to recent words in the text Hence, recent syntactically compatible terms are compared through the semantic network (discussed below) by "semantic distance". A classic example is that the word "bank" when used in close proximity to "river" has a different meaning from the same word when used in close proximity to "check".
To make this concept work correctly, an underlying semantic network defined over the word senses is needed. An example of such a network is illustrated in the discussion which follows. Note that only one link type is used. This an "association link" which will be assigned a link strength from 0 to 1. Past industrial experience with commercial systems has shown difficulty in maintaining rich semantic networks with many link types. Further, this concept indexing scheme does not require a deep understanding of the relationship between word senses. It simply must account for the fact that there is a relationship of some level of belief.
The present invention uses a new form of statistical natural language processing that uses only information directly acquirable from a published dictionary and statistical context tests. Words are observed in a local region about the word in question and compared against terms in a "semantic network" that is derived directly from published dictionaries (see discussion below on automatic acquisition.) The resulting statistical test determines the meaning, or reports that it cannot determine the meaning based upon the available context (In this latter case, the method simply indexes over the word itself as in conventional text retrieval, defaulting to keyword or thesaurus processing).
This method overcomes all the limitations discussed above. Hand-crafted rules are not required. The method applies to any text in any subject (obviously, in vertical subject domains, the percentage of words that can be disambiguated increases with a dictionary focused on that subject.) No training is required and exceptions outside of a subject domain can easily be identified. The significance of this method is that now, any text may be indexed to the meanings of words defined in any published dictionary - generic or specialized. This allows much more accurate retrieval of information. Many fewer false hits will occur during text retrieval.

**Concept Indexing**

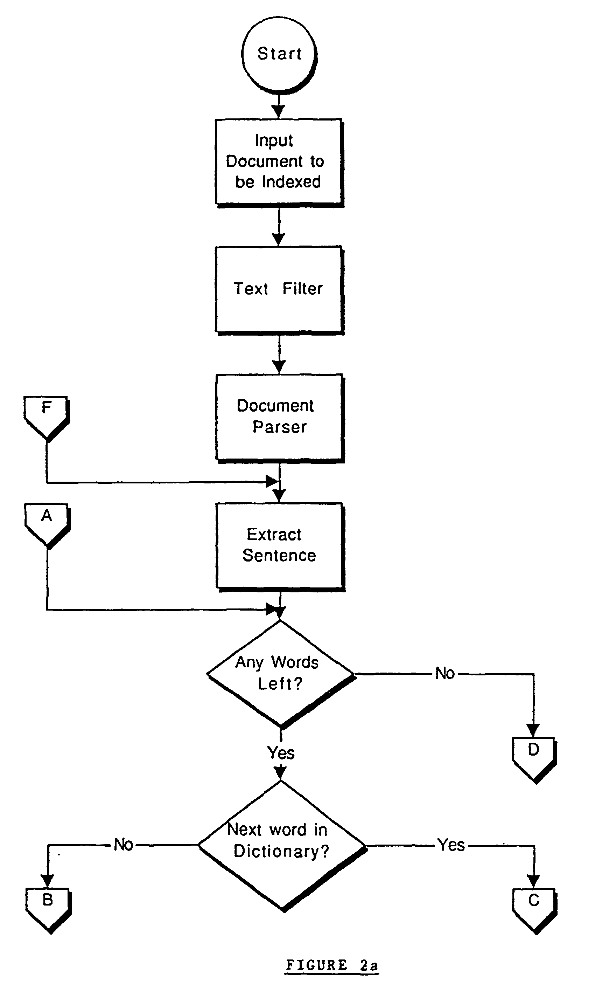

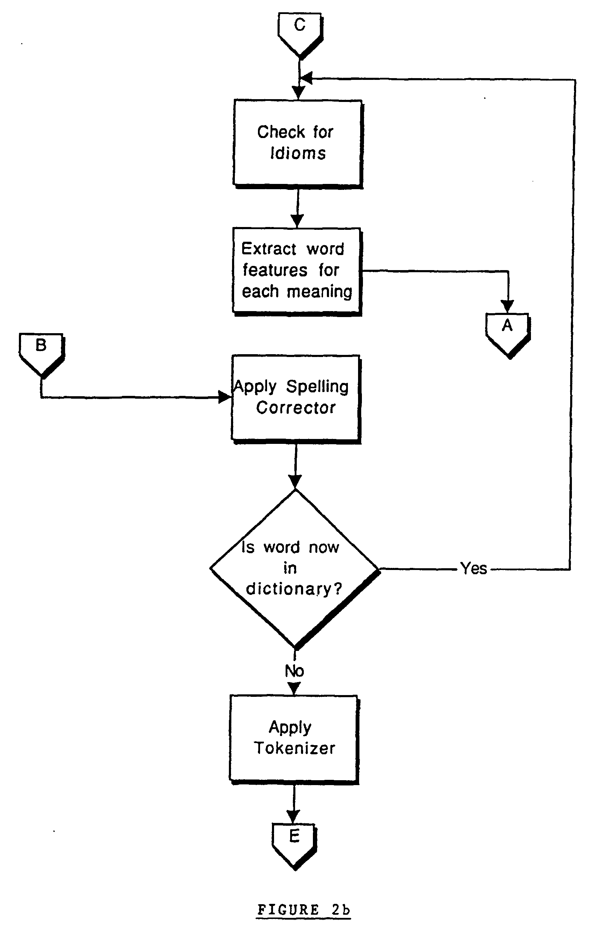

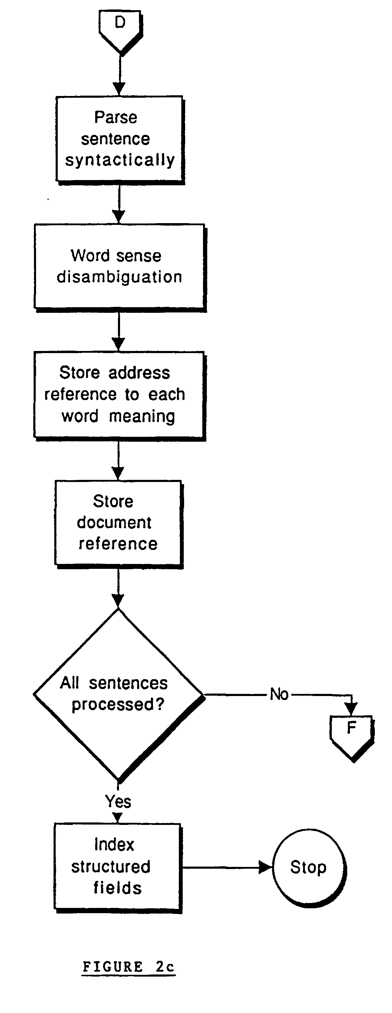

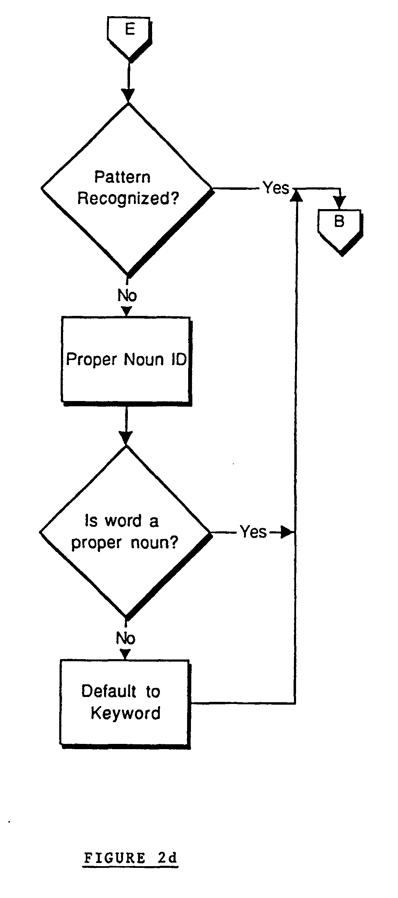

Figures 2a-d show a detailed breakout of the concept indexing process. The process extracts sentences from the text, tags the words within those sentences, looks up words and analyzes morphology, executes a robust syntactic parse, disambiguates word senses and produces the index.

The first step in the indexing process is to extract sentences or other appropriate lexical units from the text. A tokenizer module that matches character strings is used for this task. While most sentences end in periods or other terminal punctuation, sentence extraction is considerably more difficult than looking for the next period. Often, sentences are run on, contain periods with abbreviations creating ambiguities, and sometimes have punctuation within quotes or parenthesis. In addition, there exist non-sentinel strings in text such as lists, figure titles, footnotes, section titles and exhibit labels. Just as not all periods indicate sentence boundaries, so too, not all paragraphs are separated by a blank line. The tokenizer algorithm attempts to identify these lexical boundaries by accumulating evidence from a variety of sources, including a) Blank lines, b) Periods, c) Multiple spaces, d) List bullets, e) Uppercase Letters, f) Section numbers, h) Abbreviations, g) Other Punctuation.

For example:

ConQuest™, by Mr. Edwin R. Addison and Mr. Paul E. Nelson is 90.9 percent accurate in retrieving relevant documents. It has the following characteristics:

- English only Queries
- Fast Integrated Ranking and Retrieval

In the above example, the sentence contains 6 periods, but only the last one demarks the end of the sentence. The others are ignored for the following reasons. They follow abbreviations or single capital letters; they are not followed by two spaces; or they are embedded between numbers. Furthermore, the next three sentences are not separated by periods. In the method of the present invention, the list header and each item are considered separate sentences.

Dictionary lookup, the second step in the process requires several subordinate processes (defined in more detail below) which includes a tokenizer, morphological analyzer, proper noun identification, idiom processing and a spell checker. First, the tokenizer applies matching rules to the input sentence to look for multiple word idioms or proper nouns, contractions, special numbers like phone numbers or social security numbers, alphanumeric strings, and the like. After completion of tokenization, a dictionary look-up takes place that extracts all ambiguous word senses and idioms.

If a word is not recognized, morphological analysis routines are activated to find candidate words. These pattern matching rules apply appropriate spelling and feature change rules to dictionary roots for affixes. If a candidate word is still not found, a closed loop spelling corrector is applied. Finally, if there is still no word candidate, proper noun identification, acronym testing or a word category inference algorithm is activated using special rules to identify unknown words. For example, it may be inferred that any string of the form "DD Form WXYZ" where WXYZ is a number is a single token corresponding to a government form.

1) Tokenization: The dictionary is bypassed completely for words which contain numbers. These "words", are passed to a small set of hard-coded subroutines which determine the type of word. Examples include:

410-644-2400     (Phone number)
139-23-9024      (Social security number)
29 Jan 92        (Date)

2) Dictionary Lookup: Once word boundaries are determined, words are retrieved from the dictionary. Information that is stored for each word in the dictionary includes the following: a) All the meanings of the word, b) The parts of speech for each meaning, c) Pointers into the semantic networks for each meaning, and d) Information on how the word is used in idioms.

As an example, consider the possible meanings or word senses of the word "ball". They are represented as follows:

1. noun, "round spherical object" Word Sense A9C2 (pointer into semantic network)
2. verb, "to gather into a ball, wad" Word Sense A9C3
3. noun, "dance or party, typically formal" Word Sense A9C4
4. Third word of idiom #EB23, "Have a ball"

3) Morphological Analysis: If a word can not be found in the dictionary, then morphological analysis will strip off suffixes of the word and attempt to look up the root word in the dictionary. This is done with morphological rules, which are represented as follows:

| If word suffix is: | Find dictionary word with this suffix: | Dictionary word part of speech: | New word part of speech: |
|---|---|---|---|
| i e s | y | noun: singular | noun: plural |
| ing | - | verb: infinitive | verb: 3rd person sing. |

4) Proper Noun Identification: A mechanism for identifying proper nouns in text is provided, because it is unreasonable to expect a user to enter all relevant proper nouns into the dictionary. The algorithm scans text for key words or phrases that indicate proper nouns. These include titles (Mr., Ms., Mrs., Ph.D., MS, BS, CPA, etc.), capitalized letters, words typically used in organizations (Association, Institute, Office, Organization, United, International, American, etc.), and acronyms.

If there is supporting evidence that a word is a proper noun, and it is not in the dictionary, then it is assumed that the word is indeed a proper noun. If it is in the dictionary, the method will look for further supporting evidence by performing syntactic analysis on the word, at which time it may be declared to be a proper noun and is indexed as such.

5) Idiom Processing: When a word is retrieved from the dictionary, all of the information about how that word may be used in idioms is also retrieved. This information includes the idiom in which the word is used, and the number of the word within the idiom. This information is used to collect the words of an idiom into a single concept, which is then passed to the natural language algorithms. As an example, consider:

"have a ball"

"have" -> Idiom # EB23, Word #1
"a" -> idiom #EB23, Word #2
"ball" -> idiom #EB23, Word #3, Last word of the idiom

The idiom processor looks for a sequence of words, like those above, which start with word #1, continue in sequence to the last word, and all have the same idiom number. Sequences of words which pass these rules are collected into a single concept. For our purposes, we use the term "idiom" in a rather loose sense, meaning any string of more than one word that frequently occurs together and implies a single meaning or concept.

6) Fuzzy spell corrector: When all other dictionary retrieval mechanisms have failed, the method of the present invention invokes a spell corrector. The spell corrector dissects the word into fragments (morphemes). Each fragment is used as an entry point into a network of word fragments. Links in the network are traversed to find other fragments which sound alike, or are spelled alike. The resulting set of fragments is then used to find candidate words in the dictionary which has been pre-indexed based on fragment.

This spell check mechanism is "fuzzy" because it is not based on a rigid set of rules like typical soundex mechanisms. Rather, it uses accumulated evidence (in much the same way as the text retrieval engine) to find strong candidate words, which are then ranked by their suitability. This "fuzziness" provides a single integrated mechanism for correcting words with spelling errors, phonetic errors, and Optical Character Recognition (OCR) errors.

The third step is parsing. Once the input sentence has been prepared for parsing, a robust syntactic parser with integrated semantic interpretation is applied. The parser is a bottom up chart parser with unification rules. Full sentences will always be attempted in parsing. However, when sentences are ungrammatical or unwieldy, or when the input text string is not a full sentence, the chart parser will produce phrase or fragment parses. Hence, the output of the parser may be a complete sentence parse, a collection of phrase parses with missing attachments, or even an isolated word group. In any case, the parser never fails (100% recovery).

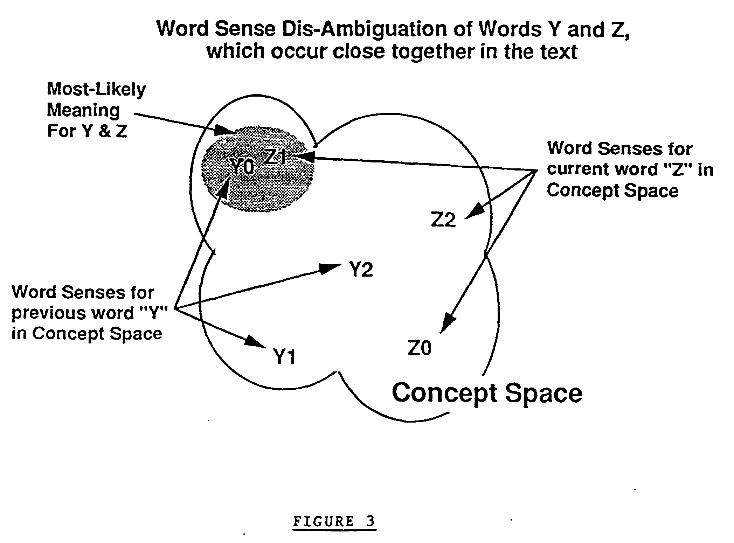

The fourth step in the processing is to disambiguate word senses not handled by the parser. This is a semantic word sense disambiguation and takes place via a spreading activation concept through a semantic network. Figure 3 illustrates the concept which is to disambiguate word senses based on "concept collocation". If a new word sense appears in the text, the likelihood is that it is similar in meaning to recent words in the text. Hence, recent syntactically compatible terms are compared through the semantic network by spreading activation or semantic "distance".

An underlying semantic network defined over the word senses is used in this step.. Note that only an "association link" types is used (which will be assigned a link strength from 0 to 1, or a fuzzy link strength in a fuzzy logic implementation of the network.)

An another example, consider the sentence "Tools are required to identify software bugs." The correct meaning of the work "tool" may be found by spreading activation. The nodes in the network correspond to work senses or idioms. The arcs contain assigned or computed weights. The significant words in the input string or sentence are: tools, require, identify, software, bugs. The word tools has two work senses:

tool-1, such as hammer or saw, and
tool-2, as in software.

Consider the term tool-1. The spreading activation algorithm will find its relationship and weight to other terms by searching the network from this point. The following (linked) list will be produced. The weights are the product of the weights on the arcs that must be traversed to arrive at the listed node:

| tool-1 | 1.0 |
| --- | --- |
| saw | 0.7 |
| hammer | 0.7 |
| hardware | 0.5 |
| computer | 0.4 |
| software | 0.35 |
| software | 0.32 - - removed! |
| code | 0.24 |

The weights in the list are obtained by multiplying all the link weights along the path from the top word in the list (tool-1) to each word in the list as the process "spreads" in the network. Notice that software was in the list twice, but the lower weight was removed. The second instance of software was arrived at by traversing from tool-1 to hardware to computer to software, rather than directly from hardware to software.

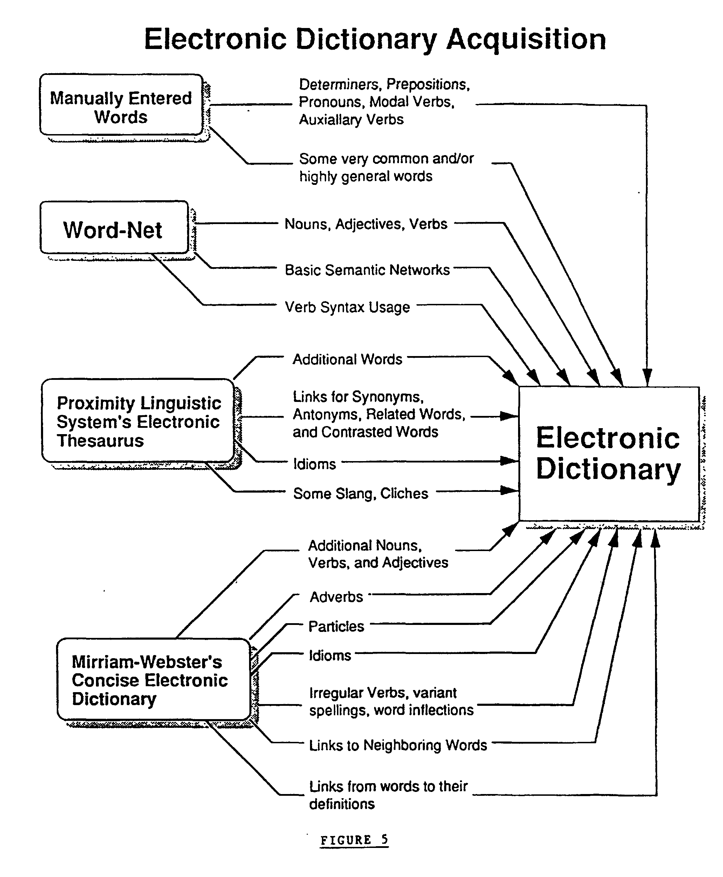

The relationship between tool-1 and software, both significant words in the parse of the sentence, has weight 0.35. By observing Figure 5, note that the relationship between tool-2 and software is 0.5. Further more, tool-2 relates to bug by weight 0.4. The words identify and require (not shown) are both rather distant from senses of tool. Hence tool-2 will be selected as the meaning of tool because it relates more strongly to the topic of conversation.

The benefit of this method of semantic analysis is that, while prone to some degree of error, it requires no generation of semantic interpretation rules for each word sense. Instead, it requires a semantic network. A later section defines how the method of the present invention acquires the required semantic network by automated means. A key claim in this invention is the use of underlying publisher's dictionaries to produce semantic networks *combined with* word sense disambiguation, as used here.

The fifth and final step in the concept indexing process is to assign index values. Each word sense or idiom found in the text is indexed by assigning an appropriate document number to that word sense (word meaning) or idiom. A separate file is used to reference the documents themselves and the location of the hits. These two files are the list of unique concepts or tokens, and the index trees.

### Hill-Climbing Search Methods

The method of the present invention incorporates an index which groups sets of documents hierarchically. Each group of documents is divided into sets of smaller sub-groups, which are further divided until only a single document remains. The method of the present invention stores many indicators with each group. Each indicator answers a particular question useful for text retrieval, such as "does any document in this group contain the word 'X'? Besides the mere presence or absence of a word in any document, indicators may hold the count of documents which contain the word, and any other useful information. By first searching over large sets of documents, the most promising sets can be quickly identified for more detailed analysis.

The hill climbing search algorithm uses the document sets described above to find document using a query from the user. First, the least frequent word sense in the query (as determined by the inverted index) is checked. However, an exhaustive list of documents containing this term is not produced. Rather a list of document sets is produced. This document set list is then checked for the presence of other word senses from the query, selecting only sets with a high presence of appropriate combined concepts. Then sub-sets of documents considered hits are searched similarly, gradually working down a tree data structure to the roots. Backtracking in the search is permitted.

The benefit of this approach over the brute force method is that speed and accuracy go hand in hand rather than compete during the retrieval. By integrating the ranking rules with the document indexes, the method of the present invention can efficiently search for the best matching document, even when the request contains dozens of search terms. The net effect is the nearly instant and accurate response to the user before all the searching is complete.

This substantially reduces the response time to the user and presents the best or approximately the best document first, not just any document first. The best document is returned almost instantaneously *regardless of the database size*. Prior art systems could only rank documents after the entire search was complete.

### Automatic Acquisition of Semantic Networks

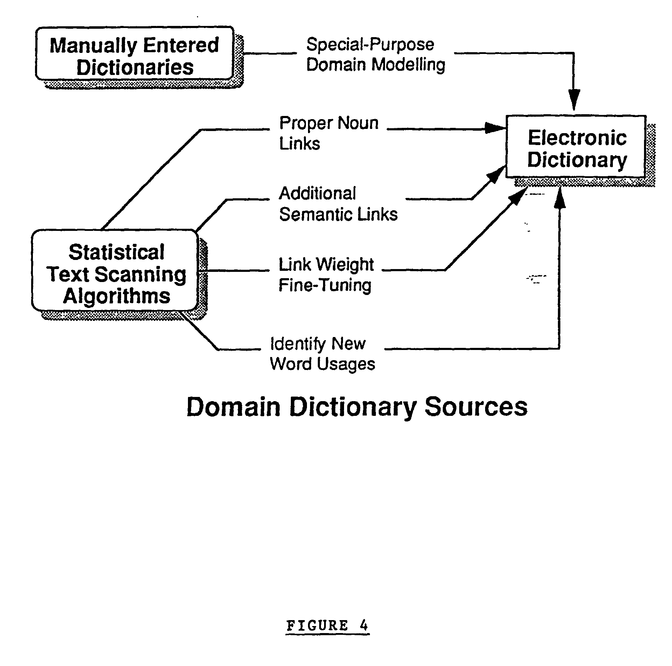

One or more publisher's dictionaries (in machine-readable form) may be loaded into a "semantic network", see Figure 4. This is a network of word meanings and relationships to other word meanings. With each word meaning or concept, information is stored, such as its part of speech, syntactic features as needed for processing, and links to several other related (not simply synonyms) word meanings. In addition to word meanings, these atomic concepts may also be idiomatic phrases, proper names that are more than one word long, or special token categories such as date patterns. The novel feature is the ability to quickly and efficiently rebundle the contents of one or more electronic dictionaries for use in text processing, a capability not previously possible because of the reliance on rule-based processing by prior art approaches.

In addition, techniques have been devised to allow the automatic addition of database specific terms, idioms or acronyms, by scanning text for concepts not already in the semantic network and by adding them by heuristic association. Finally, non-dictionary data may be added to the semantic network, such as almanac data or business names and SIC number listings. This enables the retrieval of information based upon such database entries.

This network at the meaning of words or concept level may be built by reconciling word meanings against each other from multiple dictionaries and thesaurus data such as Princeton's Word-Net (George Miller of Princeton University, has produced a 60,000 term semantic network of basic English terms). A benefit of this method is the ability to add or merge nearly any published dictionary, whether generic or specialized.

Automatic acquisition methods can be used to build the lexical database semantics and evidential reasoning weights for a new text domain, if additional accuracy is required. This includes methods to assign appropriate weight strengths, identify missing words, identify esoteric uses of words in specialized domains, etc. Most of these operations will be transparent to the user and will be accomplished as new text is indexed, or as a one-time process over a large database sample. An on-line machine readable dictionary provides access functions to allow these algorithms to operate. In addition, Princeton's "Word-Net", a semantic net of English word senses, is used as a machine readable source.

### The Composite Dictionary

Figure 5 illustrates the expected resulting dictionary and how it will be acquired. The shaded boxes illustrate information which may be obtained by algorithms and tools. The outlines and shaded boxes represent automatic acquisition methods.

The method of the present invention uses a suite of software tools to import publisher dictionaries into the desired data structure format. This suite handles many of the aspects and irregularities inherent in natural languages. These tools include but are not limited to the following:

Tools to load words:

- Load root words - Used when a reliable set of root words (singular nouns, infinitive verbs, un-intensified adjectives, and words of any other part of speech) are available. Dictionaries are the best source for root words.
- Load inflected words - Inflected words are reduced to root words using morphology. If the word can not be reduced (irregular verbs, for example), then it is added to the dictionary and linked to the root word.
- Load other words - Words which may inflected are added last. If they can be reduced to root words, their information is merged with the root word. Otherwise, the word is added as a separate word.
- Load descriptive phrases - Sometimes a descriptive phrase is used in place of a word. For example, "notify formally" is a descriptive phrase which is considered to be synonymous to "proclaim".

Tools to load links:

- Link neighboring terms - which are variations of words which occur in the dictionary. For example, the words "happy", "happily", and "happiness" are all neighboring terms.
- Link alternate spellings - of words to the main word. For example, "color" and "colour" would be linked together.
- Thesaurus links - Words from a thesaurus can be linked to synonyms, antonyms, and other relationships as specified in the thesaurus. Typically, a thesaurus will specify the meaning of the word which contains the relationships.
- Semantic network links - The WordNet format (from Princeton University) is a semantic network of words which links meanings of words to "concepts" (AKA "synonym sets") which are linked to other meanings of words. Concepts are then linked together using semantic relationships such as "member_of", "is_a", "part_of" etc.
- Link descriptive phrases to their components - Words in the phrase are linked to the phrase as a whole. For example, "notify" and "formally" are both link to the descriptive phrase "notify_formally".

Tools to Cleanse Dictionary:

- Remove duplicate meanings - Duplicate or closely related meanings of a word are merged. The "closeness" of two meanings can be determined by looking into the semantic network and computing a distance factor based on the number and the weight of links required to get from one meaning to another.
- Convert word links to meaning links - Links typically go from a meaning of a word to another word, where the meaning of the destination is not specified. The appropriate meaning can be determined by computing a distance factor (see above) between the source meaning and all possible meanings in the destination. The most closely related meaning is assumed to be the source.

Tools to Assign Link Weights:

- All links were loaded using the types specified in the original source. These types are converted to weighting values based on analysis of the following factors: a. Confidence in the dictionary source, b. Specificity of the link (e.g. synonyms are more specific than related words), c. Expansion/contraction of the link (e.g. "part_of" and "contains_as_part" links), and d. Experience and testing.
  Text scanning tools can be used to automatically adjust individual link weights based on large samples of text (see the next section).

**Text Scanning Tools**

Text scanning or statistical algorithms operating on large bodies of text may be used to acquire additional dictionary words and semantic network nodes and links. These tools include the following:

1. Find missing words: A dictionary and text scanning tool used to find words in a user's database that are not present in the dictionary. This is done automatically when the text is indexed. Words not in the dictionary are extracted from the indexes and then may be added to the dictionary.

2. Find idioms: Scan the database to find word groups used repeatedly. These word groups are likely to be idioms, and should be added to the dictionary as such. For example, "Dow Jones Industrial Average" is a common word group and should be in the dictionary as an idiom (where idiom means any word group that represents a single idea or concept). It is likely that manual intervention will be required to achieve the accuracy required.

3. Scan dictionary definitions: Link words to significant terms in their dictionary definitions. Generally, these links have lower weight than synonyms.

4. Adjust links: Words are defined by how they are used in context. For every word in a large database of text, histogram the words around it (this can be done quickly if the text is pre-indexed). If the text database is large enough, the histogram should give a good indication of words in common usage which are strongly related to the original word. Using the histogram, links can be automatically created to newly related terms, and link weights adjusted to existing terms.

5. Adjust word specificity: Information theory defines the amount of information that a <u>word</u> carries as the log of the reciprocal of its probability of occurrence in a language. We redefine this over <u>word-senses</u> rather than words. If a <u>word-sense</u> occurs, then

$$I = -\ln(M/n)$$

represents the "information" in that word-sense. Word senses like "the" and "information" are common, and therefore have low "I". In addition to "I", we also consider the relative generality or specificity of the word. A word sense like "building" when used as a noun has many links and is therefore more general than "house". Hence, "I" may also be inversely proportional to the number of links it has. These two factors will be empirically combined using an adjustable empirical combination weighting that will be varied in tests.

Prior art used this mechanism, also called "Inverse Document Frequency", over words, not word meanings.

**Query Augmentation to Improve Recall** — **Using Syntactic and Semantic Information**

The method of the present invention uses its semantic network to "explode" queries into related concepts and then to "paraphrase" the queries into many different ways of saying the same thing. Each linguistic variation is used in a statistical search over word meanings in the texts and retrievals are ranked by semantic closeness among other factors. These techniques may also be used to "front end" other search systems and databases, by producing alternative ways of requesting information.

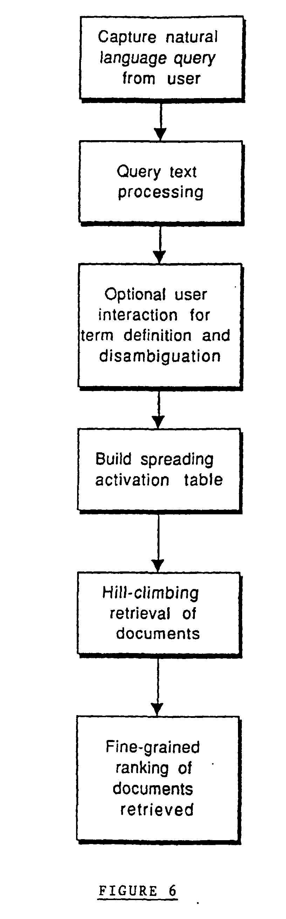

A block diagram of the query process is shown in Figure 6. Note that the user's natural language query is initially followed by the same NLP processing that was used for concept indexing. However there are some additional processes for the augmentation by synonym word senses of the user's query and term weighting. The last step is a document retrieval for all relevant concepts which are then weighted and ordered by priority.

The user's query may be a natural language query that consists of a word, phrase or sentence. The most effective query contains detailed information, but any natural language query will be accepted. In general, however, the query is expected to be similar in content to the information to be retrieved. Some examples of queries are:

1) "requirements for the use of a CASE tool"
2) "What are the requirements for using CASE tools on this project?"
3) "maintenance required for the knowledge base"
4) "linked lists"

Notice that questions are not necessarily answered, but that text relevant to the subject domain of the question is retrieved. Natural language queries involving complex planning or temporal relationships such as "Find me everything changed in the SUM yesterday by Jones regarding on-line help" may not be handled well until sophisticated "common sense" inference engines become practical and available. It is possible that later versions could be enhanced by such a deeper understanding inference engine that translates requests into both topical queries and structured field delimiters.

In addition, while less interesting, queries to allow the user to fill in a document title, author, date, or any other restriction will be allowed as well for its practical value. An example of another delimiter is geographic location of the source of the document.

The detailed steps for performing this retrieval process are:

Step 1: <u>Identify Words, Syntactic Parsing, and Semantic Interpretation</u>

These three tasks are performed using the exact same algorithms as when doing document indexing (see discussion above).

Step 2: <u>Phrase Slots</u>

The words in each phrase are put into different "slots" by syntactic and semantic parsing, to help determine their function. In the noun phrase, "the red ball", the word "the" is put in the "determiner" slot, "red" in the "modifiers" slot, and "ball" in the "head" slot. As in this example, the slots give a coarse indication of how important each word is for reducing the number of documents to be retrieved. To account for this, a "weighting factor" (or a "confidence factor") is attached to each word in the phrase based on the slot to which it was assigned.

Step 3: Look for Closely Associated Concepts

Each word in the user's phrase request has one or more meanings, which were determined in semantic interpretation as best as possible. However, if the user's exact request is not in any of the documents, it seems natural to extract information that is closely related. For example, if the user asks for "radar", it seems reasonable to also retrieve information on "jammers".

The concepts associated with each word in the user's request are used as a starting point. Then, closely related concepts are identified by traversing semantic links (semantic links identify how concepts are related) in the dictionary. These closely related concepts are given a lower weighting factor, since they do not match the user's request exactly.

Step 4: Weighting By Word Specificity

If the user asks for "cold things", the word "things" causes difficulty because it refers to a very wide range of possible objects, and therefore it does not help reduce the number of documents very much. Because of this problem, word senses have weights which indicate how specific or general they are. These are included into the weighting factors determined so far. Very general concepts, such as "things", "objects", and "stuff", contain a very low weight. Very specific concepts, such as "knee cap" have a much higher weighting factor.

Only a few of these weights need be included in the document. Other word sense weights can be determined by searching class hierarchies (class hierarchies are specified with semantic links in the dictionary). Concepts lower in the class hierarchy are assumed to be more specific.

Step 5: Index into the Concept Indexes

The word senses in the user's request (along with closely associated concepts) are used as keys into the database of concepts which were built from documents which were stored and indexed. Each concept in the index has a list of references associated with it Each concept reference points to a particular document, sentence, and phrase.

Step 6: Weighting by Quantity (AKA Inverse Document Frequency)

In information theory, the concepts which occur most often are the least useful (contain the least information). This makes sense when considering text retrieval as well. If the user has a database of information on computers, then the concept "computer" will not help much to select specific documents (as opposed to the concept "IBM", which helps much more).

Along with each concept index is stored a quantity of occurrences. The weighting factor of each concept is adjusted based on this quantity of occurrences (a large number of occurrences will cause the weight to be reduced because a frequently occurring concept carries less information since it will be in many documents).

Step 7: Ranking by Proximity

Documents are further ranked by how close the references occur to each other. For example, if the query is "the red ball", then we might extract all the references for "red" and all the references for "ball". Then, if both "red" and "ball" point to the same phrase, then naturally this phrase is a better match than other phrases in the documents.

If multiple references occur in the same phrase, then the document is given a much higher weight. If the references appear further apart, the weight will be proportionately lower.

Step 8: Adjust Phrase Weights with a Fine-grain match

The user's noun phrase query and the stored document noun phrase can be compared in detail with a graph matching procedure. This algorithm is described in more detail below. At this point, the top 100 (or other appropriate limit) candidate phrases will be fully ranked, based on their weights. Note that these weights include information all the way from the start of this algorithm and were adjusted as more information became available.

A user interaction facility will be incorporated within the method of the present invention as proposed for this program. This includes a user interaction and a user verification component. The user interaction component allows the user to respond to system queries regarding possible ambiguous queries by choosing among word meanings. The user verification component is more complex and allows the user to broaden or narrow a search. This component estimates the time required for document retrieval, allows the user to enter a new broader query, or further restrict the current query with an additional natural language delimiter. The verification step may not be required in most systems, depending on machine speed and number of simultaneous users.

To process the user's query the system augments the user's query. This augmentation begins with the parsed query, including head words of key phrases and describes associated with those words. A weight is assigned to each slot in the query phrase templates based on a generic template type. The weights will be determined empirically. The augmentation then takes place by adding closely related word senses extracted via spreading activation from the semantic word sense network.

The augmented query is then used to reference the concept index and the document reference files. A merge join algorithm is used to sort the resulting retrieved texts. A weighting is assigned to each close concept in the index based upon the closeness of the word sense in the semantic word sense network, the syntactic position relative to the query, the modifiers used in association with the head word, and a number of heuristic check questions. The weighting factor adjustments will be determined empirically during installation.

**Natural Language-Based Routing**

The method of the present invention has a "query by example" feature (also known in the art as relevance feedback) that allows a user to find a document similar to the one being viewed. The natural language processing enables this to also be used in routing of news wires, electronic mail, and the like. Unlike past systems where "profiles" had to be written by compound Boolean expressions, profiles may now be documents or portions thereof, or user written as English descriptions of a few words to a few paragraphs in length. During routing operations, the present invention indexes the English profiles as documents. Inbound news or messages are treated as "queries". Those profiles "retrieved" indicate to whom the items will be sent.

The query by example feature of the present invention may be classified as a "context vector" approach. Context vector means a collection of terms used together in context. Unlike past context vector approaches, the method of the present invention context vector is a collection of word meanings used together in context, not just a collection of terms. In addition, the method of the present invention includes the physical ordering of the terms in the original profile into the context vector. The context vector, or representation of the query document, is matched against the context vector of stored documents via the index. Documents with high enough similar content are chosen to be retrieved.

The present invention presents two significant advances: First, the "context vector" is at the word meaning level, and second, for routing applications, the end user writes a plain English abstract which is indexed as a "document", then inbound news wires are treated as queries, reducing the amount of repetitive processing required.

Additional speed can be gained by pre-expanding the words in the English profiles. These expanded terms are indexed along with the original terms in the profile. When an incoming document must be routed, its terms need not be expanded (as it would be in the original query mode), and so routing process is now much faster.

**Integrated ranking of documents based on 6 composite factors**

Most modern text retrieval systems attempt to control precision in part by ranking the order of the documents that are retrieved. There are as many ranking schemes as there are systems that rank documents. Most of these systems rank the documents on the frequency of occurrence of the terms in the query. Some systems also take into account the inverse document frequency of terms. Yet other systems rank on position giving higher weight to terms that appear in the title or leading paragraph of a document.

The method of the present invention has the ability to rank on a multitude of factors simultaneously, including those factors mentioned above combined with several new methods based upon linguistics. The main novel feature is the ability to "tune" the ranking based on all these factors and to easily add other factors whenever needed. Different document collections can be ranked on criteria that are optimized to them.

This approach may be summarized as follows: A concept level "inference network" is used to match the concept sought after to concepts represented in the text. This inference network computes a matching score based upon evidence from 6 different sources. More or fewer sources could be used in the same mechanism. The importance of the factors used is the inference networks is determined by the statistics of the database being searched. The factors count information based upon word meanings, not just words, and linguistic information, not just statistical, is taken into account.

"Ranking" of documents means sequencing the documents returned by a query so that documents which best match the user's query are displayed first. The ranking algorithm is the heart of the decision making process and is therefore one of the most important algorithms in any information retrieval system. The present invention has a very sophisticated ranking algorithm that uses six criterion for ranking documents based on the terms in the expanded query. These are defined below. Following is a definition of the algorithm to be used for combining these factors.

1. Semantic Distance. Documents which contain exact matches on the original words in the query are ranked higher than documents which contain only related terms.

2. Proximity. If the matching terms in a document occur close together, then the document is ranked higher than if the matching terms are spread widely over the document.

3. Completeness. Documents are ranked higher if they "completely" represent the query, that is, the document should contain all of the terms from the query, or at least one related term for each term in the query.

4. Quantity. Documents are ranked higher if it contains many hits on the terms in the expanded query.

5. Order and Syntax. If the order of the terms in the document is the same as the order of the terms in the query, the document is ranked slightly higher than others in the same class. When the syntax modules of the present invention are completely integrated, more advanced mechanisms for matching the syntax of the query against the syntax of the matching terms in the document can be employed.

6. Term Specificity and Information Content Certain terms, such as "stuff", "things", and "information", are especially vague and are therefore not reliable index terms. Documents and queries which contain these terms are ranked lower. Other terms are weighted by information theoretic measures.

The ranking algorithm proceeds as follows. Each query is dissected into "atomic" query fragments. These "fragments" are words for Boolean or statistical queries, but are phrases or even short sentences for natural language queries. For each "fragment", the "evidence" of each occupancy of that fragment in the document is assessed. Then, the total evidence for the fragment is calculated. Finally, the evidence for the presentation of a document is calculated by combining the fragment evidence. Thus we have a 4-step process.

Step 1. Find the query fragments, $Q^i$

Step 2. Evaluate $P^i_j$, the evidence that $Q^i$ appears in the "jth" position in the document.

Step 3. Compute $E^i$, the combined evidence for $Q_i$ calculated from $P^i_j$.

Step 4. Combine $E^i$ for all $Q^i$ into one single evidence value E for the document.

Each of these steps will be explained in further detail below.

Query fragments, $Q^i$, are "independent" parts of a query. For Boolean, keyword or statistical queries, each word or idiom in the query is an independent $Q^i$. For natural language queries, the entire query is usually a single fragment $Q^1$, unless that query is compound (multiple sentences, or use of widely scoped conjunctions, or test items). If it is compound, each $Q^i$ is found by heuristic. Query by example will contain many $Q^i$.

To evaluate $P^i_j$ for $Q^i$, it is first necessary to find the "jth" position. For word queries, it is simply the "jth" word or idiom other than stop words in the document. For natural language $Q^i$, the "jth" window of K words is taken, where k = n times the length of $Q^i$. These windows must be overlapped by 50% to be accurate, hence the $P^i_j$ computed must be the larger of the $P^i_j$ for the "jth" window or a window positioned 50% beyond the "jth" window.

To calculate $P^i_j$ requires several factors. $P^i_j$ will be allowed to vary from O to $U_k$ where $U_j$ is an upper limit determined by document position (typically $U_j$ = near the title or leading paragraph and $U_j$ = 0.5 everywhere else).

Other factors in $P^i_j$ include importance factors (word specificity, inverse document frequency and syntactic position) and closeness of match factors (semantic distance, syntactic order). An "untested" one has been proposed, but will not be presented here due to its tentative status.

To combine $P^i_j$ to get $E^i$, use the following procedure:

1) If

$$P^i_j < T, \text{ reset } P^i_j = O$$

(to remove "noise")

2)

$$1 - E^i = \_(1 - P^i_j)$$

3) Adjust for document length by an empirical formula to be determined.

The total evidence, E, is formed by combining values of $E^i$ as follows. First reduce $E^i$ by $k^r$ where $r$ varies from 0 to 1 for broad (OR) searches to narrow (AND) searches, respectively. Then, accrue $E^i$ together by:

$$E = E^1$$

$$E = E^2 (1-E^1) + E^1$$

etc., until all k values are used.

The final display is then prepared for the user. This display may contain the portion of the retrieved document with the concept "hit" in a window with the relevant text highlighted. The title and details of the document may be shown as well. The user may offered the options discussed above, which include a new query, a refined query, find the next hit, etc.

A display of the quality of a query is also available. This is the relative unlikelihood of the query drawing false hits. The more specific the query, the better.

**Private concept search by conceptual graphs**

The user may describe a subject or topic by constructing relationships in a conceptual graph. This subject is then attached to the underlying semantic network. The concept or topic may then be searched for by using it within a plain English query.

This private concept search overcomes the limitations of prior art systems in three distinct ways: First, the user describes relationships between concepts by relationship type, not arbitrary numbers. Second, the described relationship is to word meanings or concepts, not just other keywords. Finally, only highly specialized concepts need to be defined. Most concepts already exist in the dictionary.

The user simply creates a graphic, using special-purpose software or constructing a file according to a predefined specification. This conceptual graph then gets attached to the underlying semantic network. Each relationship type (not necessarily each individual link) has had a predetermined link strength from empirical testing. Otherwise the method works as usual, by plain English concept based processing.

**References to External Objects**

Prior art systems stored references in the indexes to the text databases which were used to build the indexes. These references typically contained the character position, line number, page number, or other textual positioning information.

The method of the present invention can store arbitrary reference data in the indexes. This allows the present invention to store references any kind of object, such as words in an image (a bitmap representation of a document page), features in a picture, points in a audio presentation, points in a video presentation, etc.

**Intelligent Hypertext**

The high accuracy of search and retrieval of the method of the present invention enables documents to be "browsed" without the need for pre-established hypertext links. During the browse mode operation of the system, a user enters or highlights text and the system searches for similar concepts elsewhere in the document as previously described.

**Machine Abstracting**

The method of the present invention, with some additions, can be used to automatically create summaries of English documents (called "machine abstracting"). This is done with the following algorithm:

1) Process all words in the document. This includes tokenization, dictionary lookup, morphology, syntax, and semantics. The meanings of all words (i.e. the concepts) in the document are now determined, to some reasonable degree of confidence.
2) Expand all concepts to include all of their related concepts. This is done by using spreading activation with the semantic network.
3) Determine the most frequent concepts in the document, using histograms or some other technique. This includes the concepts in the document as well as the related concepts in the document.
4) Construct the abstract by excerpting sentences from the original document. Sentences containing the most frequent concepts (or are closely related to the most frequent concepts) are used first. The abstract is simply a collection of these excerpted sentences.

There are two novel features to this approach: 1) Concepts are used to find the best sentences to use in the abstract. Prior art considered only the actual words in the document. 2) All concepts are expanded, so general domain concepts, not explicitly mentioned, will be recognized. For example, a document about investments might not mention "investment" specifically, but may mention many terms related to it. The expansion of terms will recognize this concept as relevant to the document as a whole.

**Statement of Industrial Utility**

The present invention may be useful in search and retrieval tasks related to computer databases. It is particularly suited for enhanced precision and recall in textual databases.
It will be appreciated by those skilled in the art that the present invention has been described with reference to specific examples which are not intended as limitations, and which are but a few of the variations which are possible without departing from the scope of the invention as defined by the appended claims.

**Claims**

**1.** A method for automatically searching a computer database containing one or more documents comprised of symbols representative of information expressed in a language which is understandable to human users, the method implemented by computer comprising the steps of:

(a) accepting as input a query comprising one or more symbols representative of information, said query comprising one or more terms each of which corresponds to a word, phrase or sentence of said language which is understandable to human users, and
**characterised by** the further steps of:
(a1) identifying as word, phrase or sentence said terms in said query;
(b) determining one or more likely meanings for each identified term in said query;
(c) identifying in rank order one or more of said likely meanings in said database;
(d) identifying in rank order documents within said database which contain at least one said likely meanings identified in step (c);
(e) storing an indication of the identities of said identified individual documents in the memory of a digital computer.

**2.** The method of claim 1 wherein said step (a) comprises entry of a sentence in English or another natural human language.

**3.** The method of claim 1 wherein said step (a) comprises accepting a document comprised of symbols representative of information expressed in a language which is understandable to human users, said document containing information which intended by a user to be similar to the information contained in said identified individual documents.

**4.** The method of claim 1 wherein said step (al) further includes identifying one or more terms as corresponding to terms found in one or more documents within said database.

**5.** The method of claim 1 wherein each identified term is compared to a predetermined list of terms which occur in linguistic idioms, and if a term is determined to exist in said list, then storing that term, and an identification of the idiom or idioms in which it occurs in the memory of a digital computer.

**6.** The method of claim 5 wherein said step (b) further comprises looking up each identified term in a machine-readable dictionary, and retrieving from said dictionary information comprising at least one of the following: meanings of the term; the parts of speech of each such meaning; pointer data structures into an associated semantic network for each such meaning; and information about the use of the term in linguistic idioms.

**7.** The method of claim 5 wherein the likely meanings of each term in said query are evaluated by reference to an associative network of term meanings each with an associated weight value providing statistical evidence of the likelihood of particular terms' meanings.

**8.** The method of claim 7 wherein said associative network of term meanings is derived by processing of machine-readable sources of linguistic information, using said linguistic information to develop association links between terms whose senses are semantically linked and to develop link strengths indicating the semantic closeness of the term senses.

**9.** The method of claim 1 wherein step (c) comprises a ranking according to at least one of the following criteria: inverse document frequency; syntactic position; part of speech; application of a predetermined concept tree; part of speech; predetermined ranking; and explicit selection by a human user.

**10.** The method of Claim 1 wherein step (d) of identifying documents further comprises the steps of:

(d1) identifying in a rank order, sets of documents within said database containing one or more documents which contain at least one said likely meanings identified in step (c); and
(d2) successively identifying smaller sets containing documents until a predetermined number of individual documents have been identified.

**11.** The method of claim 1 wherein step (c) further includes the step of

(c1) identifying additional likely meanings which are semantically related to said likely meanings identified in step (c) and further including identifying in a rank order one or more documents which contain at least one said likely meanings identified in step (c) or (c1).

**12.** The method of claim 1 wherein said one or more documents are comprised of sections, said sections each comprised of said symbols, and wherein said query further includes an identification of one or more sections of a selected document within said database;
said step (d) further including the step of identifying in rank order one or more of said sections which contain at least one said likely meanings identified in step (c); and
said method further including the step of storing an indication of the identities of said identified individual sections in the memory of a digital computer.

**13.** A method for automatically constructing a combination associative network of term meanings and a machine-readable dictionary, from a plurality of machine-readable linguistic databases, suitable for determining one or more likely meanings of identified terms in a query, each term being identified as a word, phrase or sentence, **characterised by** the steps of:

(a) identifying root words and their associated meanings;
(b) identifying non-root words and their associated meanings, and identifying their relationships to the root words identified in step (a);
(c) identifying descriptive phrases and idioms and their associated meanings, and identifying their semantic relationships to the root words identified in step (a);
(d) identifying link relationships among the root words, non-root words, descriptive phrases, idioms, and their associated meanings identified in steps (a-c);
(e) determining link strengths indicating the semantic closeness of meanings for each link relationship identified in step (d); and
(f) storing said root words, non-root words, descriptive phrases, idioms, meanings, links, and link strengths in the memory of a digital computer.

**14.** The method of claim 1 wherein step (b) determining likely meanings of each term comprises the steps of searching a database containing said terms and enhancement information associated therewith, and associating the enhancement information with said query.

**15.** A method for automatically enhancing the content of a document comprised of symbols representative of information expressed in a language which is understandable to human users, the document comprising one or more terms each of which corresponds to a word, phrase or sentence of said language which is understandable to human users, the method implemented by computer comprising the steps of:

(a) identifying as word, phrase or sentence said one or more terms comprised of one or more symbols within said document;
(b) determining one or more likely meanings for each term in said document;
(c) identifying in rank order one or more of said likely meanings of said identified terms;
(d) optionally identifying additional likely meanings which are related to said likely meanings identified in step (c); and
(e) storing said document, said identified likely meanings, and said identified additional likely meanings in the memory of a digital computer.

**16.** The method of claim 16 further including repeating steps (a) to (e) for successive documents to build a database of said documents.

**17.** The method of claim 16 wherein said step (c) of identifying in rank order one or more of said likely meanings further includes the step of determining an informational value of each of said likely meanings, and discarding those likely meanings having an informational value which is less than a predetermined value.

**Patentansprüche**

**1.** Verfahren zum automatischen Durchsuchen einer Computerdatenbank, die ein oder mehrere Dokumente enthält, die aus Symbolen bestehen, welche Informationen wiedergeben, die in einer Sprache ausgedrückt sind, welche menschlichen Benutzern verständlich ist, wobei das computerimplementierte Verfahren die Schritte aufweist:

(a) Akzeptieren einer Frage, die ein oder mehrere Informationen wiedergebende Symbole aufweist, als Eingabe, wobei die Frage einen oder mehrere Terme aufweist, die jeweils einem Wort, einer Phrase oder einem Satz der Sprache entsprechen, die dem menschlichen Benutzer verständlich ist, und
**gekennzeichnet ist durch** die weiteren Schritte:
(a1) Identifizieren der Terme in der Frage als Wort, Phrase oder Satz;
(b) Bestimmen einer oder mehrerer möglicher Bedeutungen für jeden identifizierten Term in der Frage;
(c) Identifizieren in bewerteter Reihenfolge einer oder mehrerer der möglichen Bedeutungen in der Datenbank;
(d) Identifizieren in bewerteter Reihenfolge von Dokumenten innerhalb der Datenbank, die mindestens eine der möglichen Bedeutungen enthalten, die in dem Schritt (c) identifiziert wurden;
(e) Speichern eines Hinweises auf die Identität der identifizierten individuellen Dokumente in dem Speicher eines digitalen Computers.

**2.** Verfahren nach Anspruch 1, wobei der Schritt (a) das Eingeben eines Satzes in Englisch oder einer anderen natürlichen menschlichen Sprache aufweist.

**3.** Verfahren nach Anspruch 1, wobei der Schritt (a) das Akzeptieren eines Dokuments aufweist, das aus Symbolen besteht, die Informationen wiedergeben, die in einer Sprache ausgedrückt sind, welche menschlichen Benutzern verständlich ist, wobei das Dokument Informationen enthält, von denen ein Benutzer beabsichtigt, dass sie den Informationen ähnlich sind, die in den identifizierten individuellen Dokumenten enthalten sind.

**4.** Verfahren nach Anspruch 1, wobei der Schritt (a1) weiterhin das Identifizieren eines oder mehrerer Terme als solchen Termen entsprechend umfasst, die in einem oder mehreren Dokumenten innerhalb der Datenbank gefunden werden.

5. Verfahren nach Anspruch 1, wobei jeder identifizierte Term mit einer vorgegebenen Liste von Termen verglichen wird, die bei linguistischen Idiomen auftreten, und wobei dann, falls ein Term als in der Liste existierend bestimmt wird, der Term und eine Identifikation des Idioms oder der Idiome, in denen er auftritt, in dem Speicher eines digitalen Computers gespeichert wird.

6. Verfahren nach Anspruch 5, wobei der Schritt (b) weiterhin aufweist: Nachschlagen jedes identifizierten Terms in einem maschinenlesbaren Wörterbuch und Erhalten von Informationen von dem Wörterbuch, die mindestens einen der folgenden Punkte aufweisen: Bedeutungen des Terms; die Teile der gesprochenen Sprache jeder solchen Bedeutung; Hinweisdatenstrukturen in ein zugeordnetes semantisches Netzwerk für jede solche Bedeutung; und Informationen über die Verwendung des Terms in linguistischen Idiomen.

7. Verfahren nach Anspruch 5, wobei die möglichen Bedeutungen jedes Terms in der Frage ausgewertet werden in Bezug auf ein zugeordnetes Netzwerk von Termbedeutungen, von denen jeder ein Gewichtungswert zugeordnet ist, der eine statistische Bedeutung der Wahrscheinlichkeit der speziellen Bedeutung des Terms bereitstellt.

8. Verfahren nach Anspruch 7, wobei das assoziative Netzwerk von Termbedeutungen erhalten wird durch Verarbeiten von maschinenlesbaren Quellen von linguistischen Informationen, wobei diese linguistischen Informationen verwendet werden, um Assoziationsverknüpfungen zwischen Termen zu entwickeln, deren Bedeutungen semantisch verknüpft sind, und um Verknüpfungsstärken zu entwickeln, die die semantische Geschlossenheit der Termbedeutungen anzeigen.

9. Verfahren nach Anspruch 1, wobei der Schritt (c) eine Bewertung gemäß mindestens einem der folgenden Kriterien aufweist: inverse Dokumentfrequenz; syntaktische Position; Teil der gesprochenen Sprache; Anwendung eines vorgegebenen Konzeptbaums; Teil der gesprochenen Sprache; vorgegebenes Bewerten; und explizite Auswahl durch einen menschlichen Benutzer.

10. Verfahren nach Anspruch 1, wobei der Schritt (d) des Identifizierens von Dokumenten weiterhin die Schritte aufweist:

(d1) Identifizieren in bewerteter Reihenfolge von Sätzen von Dokumenten innerhalb der Datenbank, die ein oder mehrere Dokumente enthalten, die mindestens eine der möglichen Bedeutungen enthalten, die in den Schritten (c) identifiziert wurden; und
(d2) sukzessives Identifizieren kleinerer Dokumente enthaltender Sätze, bis eine vorgegebene Anzahl von individuellen Dokumenten identifiziert worden ist.

11. Verfahren nach Anspruch 1, wobei der Schritt (c) weiterhin den Schritt aufweist:

(c1) Identifizieren zusätzlicher möglicher Bedeutungen, die semantisch den möglichen Bedeutungen verwandt sind, die in dem Schritt (c) identifiziert wurden, und weiterhin das Identifizieren in einer bewerteten Reihenfolge von einem oder mehreren Dokumenten, die mindestens eine der möglichen Bedeutungen enthalten, die in dem Schritt (c) oder (c1) identifiziert wurden.

12. Verfahren nach Anspruch 1, wobei das eine oder die mehreren Dokumente aus Abschnitten bestehen, wobei die Abschnitte jeweils aus den Symbolen ausgebildet sind, und wobei die Frage weiterhin eine Identifikation von einem oder mehreren Abschnitten eines ausgewählten Dokuments innerhalb der Datenbank umfasst;
wobei der Schritt (d) weiterhin den Schritt des Identifizierens in bewerteter Reihenfolge von einem oder mehreren der Abschnitte aufweist, die mindestens eine mögliche Bedeutung enthalten, die in dem Schritt (c) identifiziert wurde; und
wobei das Verfahren weiterhin den Schritt des Speicherns einer Identifikation der Identitäten der identifizierten individuellen Abschnitte in dem Speicher eines digitalen Computers aufweist.

13. Verfahren zum automatischen Konstruieren einer Kombination eines assoziativen Netzwerks von Termbedeutungen und eines maschinenlesbaren Wörterbuchs aus einer Mehrzahl von maschinenlesbaren linguistischen Datenbanken geeignet zum Bestimmen von einer oder mehreren möglichen Bedeutungen von identifizierten Termen in einer Frage, wobei jeder Term als ein Wort, eine Phrase oder ein Satz identifiziert wird, **gekennzeichnet durch** die Schritte:

(a) Identifizieren von Kemworten und ihrer zugehörigen Bedeutungen;

(b) Identifizieren von Nicht-Kernworten und ihrer zugehörigen Bedeutungen und Identifizieren ihrer Beziehungen zu den Kernworten, die in dem Schritt (a) identifiziert wurden;

(c) Identifizieren von beschreibenden Phrasen und Idiomen und ihrer zugeordneten Bedeutungen und Identifizierung ihrer semantischen Beziehungen zu den Kernworten, die in dem Schritt (a) identifiziert wurden;

(d) Identifizieren von Verknüpfungsbeziehungen zwischen den Kernworten, Nicht-Kernworten, beschreibenden Phrasen, Idiomen und ihren zugeordneten Bedeutungen, die in den Schritten (a-c) identifiziert wurden;

(e) Bestimmen der Verknüpfungsstärken, die die semantische Enge der Bedeutungen für jede Verknüpfungsbeziehung anzeigen, die in dem Schritt (d) identifiziert wurde; und

(f) Speichern der Kernworte, Nicht-Kernworte, beschreibenden Phrasen, Idiome, Bedeutungen, Verknüpfungen und Verknüpfungsstärken in dem Speicher eines digitalen Computers.

**14.** Verfahren nach Anspruch 1, wobei der Schritt (b) des Bestimmens der möglichen Bedeutung jedes Terms den Schritt des Durchsuchens einer Datenbank, die diese Terme und weitergehende Informationen, die diesen zugeordnet sind, enthält, und das Zuordnen der weitergehenden Informationen zu der Frage aufweist.

**15.** Verfahren zum automatischen Weiterentwickeln des Inhalts eines Dokuments, das aus Symbolen besteht, welche Informationen wiedergeben, die in einer Sprache ausgedrückt sind, welche menschlichen Benutzern verständlich ist, wobei das Dokument einen oder mehrere Terme enthält, die jeweils einem Wort, einer Phrase oder einem Satz der Sprache entsprechen, die dem menschlichen Benutzer verständlich ist, wobei das computerimplementierte Verfahren die Schritte aufweist:

(a) Identifizieren des einen oder der mehreren Terme, die durch ein oder mehrere Symbole innerhalb des Dokuments ausgebildet werden, als Wort, Phrase oder Satz;

(b) Bestimmen einer oder mehrerer möglicher Bedeutungen für jeden Term in dem Dokument;

(c) Identifizieren in bewerteter Reihenfolge von einer oder mehreren der möglichen Bedeutungen der identifizierten Terme;

(d) optionales Identifizieren zusätzlicher möglicher Bedeutungen, die mit den möglichen Bedeutungen in Beziehung stehen, die in dem Schritt (c) identifiziert wurden; und

(e) Speichern des Dokuments, der identifizierten möglichen Bedeutungen und der identifizierten zusätzlichen möglichen Bedeutungen in dem Speicher eines digitalen Computers.

**16.** Verfahren nach Anspruch 16, das weiterhin das Wiederholen der Schritte (a) bis (e) für nachfolgende Dokumente umfasst, um eine Datenbank der Dokumente aufzubauen.

**17.** Verfahren nach Anspruch 16, wobei der Schritt (c) des Identifizierens in bewerteter Reihenfolge einer oder mehrerer der möglichen Bedeutungen weiterhin den Schritt aufweist des Bestimmens eines Informationswerts jeder der möglichen Bedeutungen und des Vernachlässigens solcher möglichen Bedeutungen, die einen Informationswert haben, der kleiner als ein vorgegebener Wert ist.

**Revendications**

**1.** Procédé destiné à rechercher automatiquement une base de données informatique contenant un ou plusieurs documents se composant de symboles représentant des informations exprimées en un langage susceptible d'être compris par des utilisateurs humains, le procédé mis en application par ordinateur comprenant les étapes consistant à :

(a) accepter en tant qu'entrée une requête comprenant un ou plusieurs symboles représentant des informations, ladite requête comprenant un ou plusieurs termes correspondant chacun à un mot, une expression ou une phrase dudit langage qui est susceptible d'être compris par des utilisateurs humains, et

**caractérisé en outre par** les étapes consistant à :

(a1) identifier en tant que mot, expression ou phrase lesdits termes dans ladite requête ;

(b) déterminer une ou plusieurs significations probables pour chaque terme identifié dans ladite requête ;

(c) identifier par ordre de classement une ou plusieurs desdites significations probables dans ladite base de données ;

(d) identifier par ordre de classement des documents, situés dans ladite base de données lesquels contiennent au moins l'une desdites significations probables identifiées lors de l'étape (c) ;

(e) stocker une indication des identités desdits documents individuels identifiés dans la mémoire d'un ordinateur numérique.

2. Procédé selon la revendication 1, dans lequel ladite étape (a) comprend l'entrée d'une phrase en anglais ou dans un autre langage humain naturel.

3. Procédé selon la revendication 1, dans lequel ladite étape (a) comprend le fait d'accepter un document se composant de symboles représentant des informations exprimées dans un langage susceptible d'être compris par des utilisateurs humains, ledit document contenant des informations qu'un utilisateur souhaite similaires aux informations contenues dans lesdits documents individuels identifiés.

4. Procédé selon la revendication 1, dans lequel ladite étape (a1) comprend en outre l'étape consistant à identifier un ou plusieurs termes comme correspondant à des termes trouvés dans un ou plusieurs documents situés dans ladite base de données.

5. Procédé selon la revendication 1, dans lequel chaque terme identifié est comparé à une liste prédéterminée de termes qui apparaissent dans des tournures linguistiques, et si l'on détermine le fait qu'un terme existe dans ladite liste, ce terme est alors stocké, ainsi qu'une identification de la ou des tournures dans laquelle(lesquelles) il apparaît, dans la mémoire d'un ordinateur numérique.

6. Procédé selon la revendication 5, dans lequel ladite étape (b) comprend en outre le fait de consulter chaque terme identifié dans un dictionnaire lisible par ordinateur, et d'extraire dudit dictionnaire des informations comprenant au moins l'un des éléments suivants : significations du terme ; parties de langage de chacune de ces significations ; structures de données de pointeur dans un réseau sémantique associé pour chacune de ces significations ; et informations concernant l'utilisation du terme dans des tournures linguistiques.

7. Procédé selon la revendication 5, dans lequel les significations probables de chaque terme dans ladite requête sont évaluées en se référant à un réseau sémantique de significations de termes présentant chacun une valeur pondérale associée fournissant la preuve statistique de la probabilité des significations particulières des termes.

8. Procédé selon la revendication 7, dans lequel ledit réseau sémantique de significations de termes est obtenu en traitant des sources d'informations linguistiques lisibles par ordinateur, en utilisant lesdites informations linguistiques pour créer des liens d'association entre des termes dont les sens sont sémantiquement liés et créer des liens de renforcement indiquant la fidélité sémantique des sens des termes.

9. Procédé selon la revendication 1, dans lequel l'étape (c) comprend un classement selon au moins l'un des critères suivants : fréquence en document inverse ; position syntaxique ; partie de langage ; application d'une arborescence conceptuelle ; partie de langage ; classement prédéterminé ; et sélection explicite par un utilisateur humain.

10. Procédé selon la revendication 1, dans lequel l'étape (d) d'identification de documents comprend en outre les étapes consistant à :

   (d1) identifier, dans un ordre de classement, des ensembles de documents à l'intérieur de ladite base de données contenant un ou plusieurs documents qui comprennent au moins l'une desdites significations probables identifiées lors de l'étape (c) ; et
   (d2) identifier successivement de plus petits ensembles contenant des documents jusqu'à ce qu'un nombre prédéterminé de documents individuels ait été identifié.

11. procédé selon la revendication 1, dans lequel l'étape (c) comprend en outre l'étape consistant à :

   (c1) identifier des significations probables supplémentaires qui sont sémantiquement associées auxdites significations probables identifiées lors de l'étape (c) et comprenant en outre le fait d'identifier dans un ordre de classement un ou plusieurs documents qui contiennent au moins l'une desdites significations identifiées lors de l'étape (c) ou (c1).

12. Procédé selon la revendication 1, dans lequel ledit(lesdits) un ou plusieurs documents sont composés de sections, lesdites sections étant chacune composées desdits symboles, et dans lequel ladite requête comprend en outre le fait d'identifier une ou plusieurs sections d'un document sélectionné à l'intérieur de ladite base de données ;
   ladite étape (d) comprenant en outre l'étape consistant à identifier dans un ordre de classement une ou plusieurs desdites sections qui contiennent au moins l'une desdites significations probables identifiées lors de l'étape (c) ; et

ledit procédé comprenant en outre l'étape consistant à stocker une indication des identités desdites sections individuelles identifiées dans la mémoire d'un ordinateur numérique.

**13.** Procédé destiné à constituer un réseau sémantique combiné de significations de termes et un dictionnaire lisible par ordinateur, à partir d'une pluralité de bases de données linguistiques lisibles par ordinateur, adapté pour déterminer une ou plusieurs significations probables de termes identifiés lors d'une requête, chaque terme étant identifié en tant que mot, expression ou phrase, **caractérisé par** les étapes consistant à :

(a) identifier des mots-racines et leurs significations associées ;
(b) identifier des mots qui ne sont pas mots-racines et leurs significations associées, et identifier leurs liaisons vis-à-vis des mots-racines identifiés lors de l'étape (a) ;
(c) identifier des expressions et tournures descriptives et leurs significations associées, et identifier leurs liaisons sémantiques vis-à-vis des mots-racines identifiés lors de l'étape (a) ;
(d) identifier des liens entre les mots-racines, les mots qui ne sont pas mots-racines, les expressions, tournures descriptives, et leurs significations associées identifiées lors des étapes (a-c) ;
(e) déterminer des liens solides indiquant la fidélité sémantique des significations pour chaque lien identifié lors de l'étape (d) ; et
(f) stocker lesdits mots-racines, mots qui ne sont pas mots-racines, expressions, tournures descriptives, significations, liens et liens solides dans la mémoire d'un ordinateur numérique.

**14.** Procédé selon la revendication 1, dans lequel l'étape (b) déterminant des significations probables de chaque terme comprend les étapes consistant à rechercher une base de données contenant lesdits termes et des informations d'enrichissement y étant associées, et à associer les informations d'enrichissement à ladite recherche.

**15.** Procédé destiné à améliorer automatiquement le contenu d'un document comprenant des symboles représentant des informations exprimées dans un langage susceptible d'être compris par des utilisateurs humains, le document comprenant un ou plusieurs termes correspondant chacun à un mot, une expression ou une phrase dudit langage qui est susceptible d'être compris par des utilisateurs humains, le procédé mis en application par ordinateur comprenant les étapes consistant à :

(a) identifier en tant que mot, expression ou phrase ledit(lesdits) un ou plusieurs termes se composant d'un ou de plusieurs symboles à l'intérieur dudit document ;
(b) déterminer une ou plusieurs significations probables pour chaque terme dans ledit document ;
(c) identifier, dans un ordre de classement, une ou plusieurs desdites significations probables desdits termes identifiés ;
(d) identifier facultativement des significations probables supplémentaires qui sont associées auxdites significations probables identifiées lors de l'étape (c) ; et
(e) stocker ledit document, lesdites significations probables identifiées, et lesdites significations probables supplémentaires identifiées dans la mémoire d'un ordinateur numérique.

**16.** Procédé selon la revendication 15 comprenant en outre le fait de répéter les étapes (a) à (é) pour des documents successifs de manière à créer une base de données à partir desdits documents.

**17.** Procédé selon la revendication 15, dans lequel ladite étape (c) consistant à identifier, dans un ordre de classement, une ou plusieurs desdites significations probables comprend en outre l'étape consistant à déterminer une valeur informationnelle de chacune desdites significations probables, et à écarter les significations probables ayant une valeur informationnelle inférieure à une valeur prédéterminée.

*Figure 1*

```
                    ┌─────────┐
                   (  Start   )
                    └────┬────┘
                         ▼
                ┌──────────────────┐
                │      Input       │
                │  Document to     │
                │  be Indexed      │
                └────────┬─────────┘
                         ▼
                ┌──────────────────┐
                │                  │
                │   Text  Filter   │
                │                  │
                └────────┬─────────┘
                         ▼
   ┌─┐          ┌──────────────────┐
   │F│          │                  │
   └┬┘          │    Document      │
    │           │    Parser        │
    │           │                  │
    └──────────►└────────┬─────────┘
                         ▼
   ┌─┐          ┌──────────────────┐
   │A│          │                  │
   └┬┘          │    Extract       │
    │           │    Sentence      │
    │           │                  │
    └──────────►└────────┬─────────┘
                         ▼
                   ◇──────────◇
                  ╱ Any Words  ╲ ───No───┐
                  ╲   Left?    ╱         │
                   ◇──────────◇         ▼
                         │             ┌─┐
                        Yes            │D│
                         ▼             └─┘
                   ◇──────────◇
         ┌──No───╱ Next word in ╲───Yes───┐
         │       ╲  Dictionary? ╱         │
         ▼        ◇──────────◇           ▼
        ┌─┐                             ┌─┐
        │B│                             │C│
        └─┘                             └─┘
```

FIGURE 2a

26

EP 0 597 630 B1

FIGURE 2b

27

D

Parse
sentence
syntactically

Word sense
disambiguation

Store address
reference to each
word meaning

Store
document
reference

All sentences
processed? —No— F

Yes

Index
structured
fields → Stop

FIGURE 2c

E

Pattern
Recognized? —————— Yes

B

No

Proper Noun ID

Is word a
proper noun? ————— Yes

No

Default to
Keyword

FIGURE 2d

**Word Sense Dis-Ambiguation of Words Y and Z,
which occur close together in the text**

Most-Likely
Meaning
For Y & Z

Y0  Z1

Word Senses for
current word "Z" in
Concept Space

Z2

Y2

Word Senses for
previous word "Y"
in Concept Space

Y1

Z0

**Concept Space**

FIGURE 3

**Domain Dictionary Sources**

FIGURE 4

# Electronic Dictionary Acquisition

**Manually Entered Words**

Determiners, Prepositions, Pronouns, Modal Verbs, Auxiallary Verbs

Some very common and/or highly general words

**Word-Net**

Nouns, Adjectives, Verbs

Basic Semantic Networks

Verb Syntax Usage

**Proximity Linguistic System's Electronic Thesaurus**

Additional Words

Links for Synonyms, Antonyms, Related Words, and Contrasted Words

Idioms

Some Slang, Cliches

**Mirriam-Webster's Concise Electronic Dictionary**

Additional Nouns, Verbs, and Adjectives

Adverbs

Particles

Idioms

Irregular Verbs, variant spellings, word inflections

Links to Neighboring Words

Links from words to their definitions

**Electronic Dictionary**

FIGURE 5

Capture natural
language query
from user

Query text
processing

Optional user
interaction for
term definition and
disambiguation

Build spreading
activation table

Hill-climbing
retrieval of
documents

Fine-grained
ranking of
documents
retrieved

FIGURE 6